# EUROPEAN PATENT APPLICATION

(11) **EP 3 217 160 A1**
(43) Date of publication of application: **13.09.2017**
(21) Application number: 17156730.8
(22) Date of filing: 17.02.2017
(51) Int. Cl.: G01M 13/04

(54) **MOMENT BEARING TEST DEVICE FOR TESTING A MOMENT BEARING OF A WIND TURBINE AND A METHOD THEREOF**

(30) Priority: 11.03.2016 DK 201670141
(71) Applicant: Envision Energy (Denmark) ApS, 8600 Silkeborg (DK)
(72) Inventor: Christensen, Claus Kurt, 7080 Børkop (DK)
(74) Representative: Olesen, Birthe Bjerregaard

(57) **Abstract**

The invention relates to moment bearing test device and a method of testing a wind turbine moment bearing. The test device comprises a drive unit for rotating a first ring relative to a second ring of the moment bearing. The drive unit is mounted to at least one torque arm rotatably connected to a mounting frame. The mounting frame is configured to be mounted to the first or second ring. The test device further comprises a measuring unit for measuring a friction torque of the moment bearing. The test device acts as a mobile test device allowing the test to be performed on-site and allows the moment bearing to be tested when mounted to the rotor hub or mainframe.

## Description

### Field of the Invention

The present invention relates to a moment bearing test device comprising a mounting frame configured for mounting to a first ring of a moment bearing for a wind turbine, a drive unit rotatably coupled to said mounting frame, and a measuring unit arranged relative to a second ring of the moment bearing, wherein said drive unit is configured to rotate said first ring relative to said second ring, and wherein said measuring unit is configured to measure a signal indicative of a friction torque of the moment bearing.

The present invention also relates to a method of determining a friction torque of a wind turbine moment bearing, the wind turbine moment bearing comprising a first ring rotatably arranged relative to a second ring, where a plurality of rotatable bearing elements are arranged between the first ring and the second ring, wherein the method comprises the steps of providing a wind turbine moment bearing, mounting a test device to said moment bearing, and performing at least one test procedure on said moment bearing in order to determine at least one signal indicative of the friction torque of the wind turbine moment bearing.

### Background of the Invention

The bearing units used in modem wind turbines today are designed as large and heavy bearing units configured to assimilate the various loads generated by the rotor, the generator, the gearbox and other components in the wind turbine. Some wind turbines comprise a moment bearing arranged between the rotor and the nacelle for transferring bending loads and thrust forces from the rotor to the nacelle, which has an inner diameter of more than one metre and has a weight of several metric tons.

KR 100040348 disclose a device for bearing functional test for a bering for a wind turbine, comprises a base frame, an actuating frame, a horizontal actuator, and a vertical actuator. The base frame supports a bearing assembly which is an object of a functional test in the bottom surface. The actuating frame is arranged in the upper part of the bearing assembly to add load to the bearing assembly. The horizontal actuator pressurizes a part of the actuating frame in a horizontal direction. The horizontal actuator adds force to the horizontal direction to the bearing assembly. The vertical actuator pressurizes the rest part of the vertical actuating frame in a vertical direction. The vertical actuator adds vertical direction load or moment load to the bearing assembly.

As the wind turbine blades rotate relative to the nacelle, the moment bearing experiences various rigidities in the mainframe and the wind turbine blades are subjected to different wind shears which, in turn, are transferred to the moment bearing. The moment bearing may therefore be preloaded in order to compensate for these dynamical loadings. This ensures that the rollers located between the inner and outer rings of the moment bearing are in contact with the respective raceways, and also generates a friction torque between the two rings. This friction torque must be within acceptable tolerances in order to avoid overheating of the inner ring which, in turn, causes an expansion of the inner ring and, thus, an increased preloading.

The manufacturers of such bearing units typically use simulations or test rigs to determine the friction torque and other design parameters. The test rigs are large and heavy stationary rigs installed at the manufacturing facility. The Astraios from Schaeffler Technologies AG & Co. KG is an example of such a test rig. This test rig has a complex configuration that uses several actuators and about 300 sensors to test the performance of the test bearing. This test rig has a weight of about 350 metric tons and costs about 7 million euros. Such a test rig cannot be used to test the moment bearing when mounted to the mainframe or the hub, nor can it be used to test the moment bearing on-site.

There is thus a need for a cheap and simple test device capable of performing tests on the moment bearing at the assembly site as well as at the installation site.

### Object of the Invention

An object of the invention is to provide a test device having a cheap and simple configuration.

Another object of the invention is to provide a test device capable of performing a simplified test of a moment bearing.

A further object of the invention is to provide a test device having a mobile configuration that enables it to be transported to an installation site or an assembly site.

Another object of the invention is to provide a method of testing a moment bearing, wherein the test can be performed on-site as well as at an assembly or manufacturing site.

Yet another object of the invention is to provide a method that allows for a fast and simple mounting and testing of the moment bearing.

### Description of the Invention

As mentioned above, the invention comprises a moment bearing test device for testing a moment bearing of a wind turbine, the wind turbine moment bearing comprising a first ring rotatably arranged relative to a second ring, where a plurality of rotatable bearing elements are arranged between the first ring and the second ring, where the moment bearing test device comprises a mounting frame configured to be mounted to said first ring of the moment bearing, at least one drive unit is rotatably coupled to said mounting frame, and at least one measuring unit is configured to measure at least one signal indicative of a friction torque of the moment bearing, wherein the at least one drive unit is configured to rotate said first ring relative to said second ring when mounted, characterised in that the moment bearing test device further comprises at least one torque arm having at least one mounting interface, wherein said at least one torque arm is rotatably connected to the mounting frame, and where said at least one drive unit is mounted to said at least one mounting interface.

This configuration provides a cheap and simple test device capable of performing one or more tests of the moment bearing, i.e. the wind turbine moment bearing. This configuration further allows for a fast and simple mounting and demounting of the test device. The present test device also allows for easy handling and positioning of the test device relative to the moment bearing.

Conventional test rigs or stands require several separate sections besides the test rig or stand, such as a load section for applying torque and other loads to the test bearing, a power section for powering the test rig or stand, a lubricating section for supplying lubrication to the test bearing, and a measuring section for measuring the performance of the test bearing. These separate sections add to the complexity and costs of the test rig or stand, while adding to the time required to mount and demount the test bearing relative to the test rig or stand.

The moment bearing comprises a first ring, e.g. an inner ring, rotatably arranged relative to a second ring, e.g. an outer ring. At least two rows of rotatable bearing elements are arranged between the first and second rings. A cage may further be arranged in a space between the first and second rings wherein the cage is configured to substantially hold the bearing elements in place during rotation. This spacing between the first and second rings may be closed off by means of sealing elements located at either sides of the moment bearing. This spacing may be partly or fully filled with a lubricant, such as oil or grease.

According to a special embodiment, said at least one torque arm is rotatably connected to the mounting frame via a four-point bearing system, the bearing system comprises a first bearing element rotatably arranged relative to a second bearing element.

The mounting frame and torque arm may be mounted to a four-point bearing system so that the mounting frame is able to rotate relative to the torque arm. The bearing system may comprise a first bearing element, e.g. an inner ring, rotatably arranged relative to a second bearing element, e.g. an outer ring. The first bearing element may be connected to the mounting frame and the second bearing element may be connected to the torque arm, or vice versa. At least one row, e.g. two or more, of rotatable bearing elements, e.g. rollers or balls, may be arranged between the first and second bearing elements. The bearing elements may be arranged in a cage configured to substantially keep the bearing elements at their respective positions during rotation. The cage may be arranged in a space between the first and second bearing elements. This allows axial and radial forces in both directions to be transferred between the torque arm and the mounting frame. This, in turn, eliminates the need for additional bearings and, thus, saves weight and space of the test device. Other types of four-point bearing systems may be used.

This configuration enables the present test device to act as a mobile test device capable of being transported to any test site where a test is needed. The present test device may be loaded onto a vehicle, e.g. a truck or trailer, or a vessel, e.g. an installation or transport vessel, and transported to the desired test site. The test site may thus be an installation site, an assembly site, or a manufacturing site. The "installation site" is defined as the site at which the wind turbine is erected. The "assembly site" is defined as the site at which the moment bearing is assembled or the site at which the wind turbine is partly or fully assembled before being transported to the installation site. The "manufacturing site" is defined as the site at which one or more components of the wind turbine are manufactured.

Conventional test rigs or stands are permanently installed at a manufacturing site and, thus, require that the moment bearing is transported to the location of the respective test rig or stand. Furthermore, these conventional test rigs or stands cannot be used to test the moment bearing once it has been mounted to the rotor hub or the mainframe of the nacelle. Furthermore, conventional test rigs or stands typically use large and heavy mounting frames to provide sufficient structural strength so that the axial and radial forces in both directions can be transferred from the mounting frame to the test bearing.

No separate or integrated lubricating section or load section is required which reduces the costs and complexity of the present test device. This, in turn, allows for a simplified configuration of the drive unit or power section, as less power is required to operate the test device. Furthermore, no arrangement of linear actuators are required to test the moment bearing which, in turn, saves material and costs of the test device compared to conventional test rigs or stands.

According to one embodiment, said at least one mounting interface comprises a first mounting interface and at least a second mounting interface for selective mounting of the at least one drive unit.

The test device comprises at least one torque arm extending in a radial direction outwards from a central axis of the test device. Each torque arm comprises a central part and a free end facing away from the central part. The measuring unit is arranged at or near the free end of the torque arm. This allows the friction force of the moment bearing to be measured at at least one mounting point. The radial distance between the central axis and this mounting point, e.g. point of measurement, may further be measured or determined prior to performing the test. The measured friction force and the radial distance are then used to calculate the friction torque. This also allows for an optimal measurement of the friction force or torque as the measurement can be performed without having to take into account the loss of energy due to the efficiency of individual electrical or mechanical components of the test device.

The central part comprises at least one mounting interface for mounting the drive unit. In example, two, three, four or more mounting interfaces may be arranged at the central part. This allows for a selective mounting of a single drive unit or multiple drive units. The individual mounting interfaces also allow the mounting of two or more drive units, wherein the individual drive units are positioned relative to each other. This allows for use of smaller drive units compared to a single large drive unit, wherein the individual drive units are operated individually or synchronously.

The individual torque arms may be configured as an extendable torque arm which can be adjusted in the radial direction so that it fits the dimensions of a particular moment bearing. The mounting frame, e.g. the mounting plate, may furthermore be configured as extendable mounting frame, e.g. an extendable mounting plate, which also can be adjusted in the radial direction so that it fits the dimensions of a particular moment bearing. This allows the test device to be adapted to various types of moment bearings.

Alternatively, the test device may comprise a set of different torque arms where the dimensions of each torque arm are configured to match a particular type of moment bearing. The test device may thus be outfitted with a selected torque arm depending on the type of moment bearing being tested.

According to one embodiment, said at least one torque arm comprises a first torque arm extending in a first radial direction and at least a second torque arm extending in at least one second radial direction.

The test device may comprise a multiple of torque arms each extending a predetermined radial direction. In example, the test device may comprise two, three, four or more torque arms. The individual torque arms may be angled between 0 degrees and 180 degrees relative to each other. The individual torque arms may be jointed together at the central part. Alternatively, the individual torque arms may form part of a single piece where the individual free ends extend outwards from a common central part. This allows the friction torque of the moment bearing to be distributed over the respective torque arms.

The measuring unit may be selectively connected to one or more of the torque arms. Alternatively, a measuring unit may be connected to each of the torque arms. This allows the friction torque to be measured at two or more mounting points. Said measurements may be analysed or processed individually or combined to form a single value representative of the friction torque.

According to one embodiment, said at least one torque arm comprises a free end, the free end being connected either directly to the second ring or indirectly via an intermediate element, e.g. the at least one measuring unit.

The free end of each respective torque arm may be directly connected to the second ring of the moment bearing. The respective measuring unit may then be positioned at or near this free end so that it is able to directly or indirectly measure the friction torque of the moment bearing. Alternatively, the free end of each respective torque arm may be indirectly connected to the second ring of the moment bearing via an intermediate element, e.g. a spring element, a wire, a rod, or another suitable element. The measuring unit may alternatively be used as the intermediate element, wherein one end of the measuring unit is connected to the second ring and the other end is connected to the respective free end. The measuring unit may be connected to the second ring and the free end of the torque arm using any suitable connection, such as a hook, an eye, a threated coupling, or another suitable connection. The output signal of the respective measuring unit may optionally be used to calculate the friction torque using any known techniques. This allows for an optimal measurement of the friction force or torque, as mentioned above.

A mounting element, e.g. a bolt, a threated rod, a locking pin or the like, may be positioned relative to a complementary mounting element, e.g. a mounting hole, of the second ring. Alternatively, the mounting element may be a mounting hole in which separate fastening means, such as bolts, threated rods, locking pins or the like, may be positioned. This mounting element may then define the mounting point for the free end of the torque arm. Another mounting element may optionally be positioned relative to the first mounting element, wherein this mounting element defines a stop positon for the rotation of the torque arm. The free end of the torque arm is positioned between these two mounting elements and is thus able to rotate between a start position and the stop position. This limits the rotation of the torque arm relative to the second ring during testing. The mounting elements also act as a safety feature in the event that the measuring unit or the connections should fail, thereby preventing the torque arm from rotating beyond the start or stop position.

According to one embodiment, said mounting frame comprises a mounting plate on which a plurality of mounting elements are arranged, wherein said plurality of mounting elements is configured to be mounted to complementary mounting elements located on the first ring.

The test device may comprise a mounting plate configured to be mounted to the moment bearing, e.g. the first or second ring thereof. A plurality of mounting elements as described above are arranged along the periphery of this mounting plate. The mounting elements of the test device may be selectively mounted to or positioned relative to one or more complementary mounting elements located on the moment bearing. The mounting plate may be a solid plate or comprise one or more cut-outs for saving material and weight. The mounting plate may have a continuous periphery defined by a circular shaped plate or a segmented periphery defined by a plurality of individual plate member, e.g. extendable plate member.

Alternatively, the test device may comprise a set of different mounting plates where the dimensions of each mounting plate are configured to match a particular type of moment bearing. The test device may thus be outfitted with a selected mounting plate depending on the type of moment bearing being tested.

The mounting plate and/or the torque arm may be made of metal, such as aluminium, steel or iron, fibre reinforced plastics, such as FRP or GFRP, composites, or another suitable material. The fibres may be organic fibres, carbon fibres, glass fibres, basalt fibres, aramid fibres, or other suitable fibres. The dimensions of the mounting plate and/or the torque arm may be selected to provide sufficient structural strength to the test device.

According to a special embodiment, said at least one drive unit is rotatably coupled to a gear unit, the gear unit comprises a first gear element configured to engage a second gear element located on the mounting frame, e.g. a first bearing element.

The drive unit is configured to rotate the first ring relative to the second ring, or vice versa, at a constant speed or frequency or at a variable speed or frequency. The speed or frequency may be set or adjusted via a control unit. The drive unit may in example be powered by an internal power source, e.g. batteries or fuel cell, or an external power source, e.g. mains. The power source may be connected to a motor, e.g. an electrical motor, rotatably coupled to a gear unit. The gear unit may comprise a first gear element configured to interact with a second/complementary gear element located on the four-point bearing system, e.g. the first or second bearing element. In one example, the first gear element may be a pinion and the second gear element may be an annular gear. The first and second gear elements may each have a plurality of engaging teeth that enable the drive unit to rotate the mounting frame. In another example, the first and second gear elements may interact with each other by means of a belt drive wherein one or more belts extend around the periphery of each gear element. The belt may be a toothed belt, a V-belt, a flat belt, a ribbed belt, or another suitable type of belt. Other types of rotatable couplings or gearings may be used to rotate the mounting frame relative to the torque arm. This allows the test device to rotate one ring of the moment bearing relative to the other ring.

The four-point bearing system may be aligned with the central axis of the test device where the gear unit may be arranged relative to this bearing system. If at least two drive units are used, the gear unit of each drive unit may be arranged relative to this bearing system. This allows the test device to rotate the mounting frame and said one ring while substantially holding the torque arm and said other ring in the same position.

According to one embodiment, the moment bearing test device further comprises at least one temperature sensor arranged relative to at least one of said first and second rings of the moment bearing.

The measuring unit or units may be arranged relative to the first or second ring. In example, the measuring units may be strain gauges, load cells, torque sensors, or another suitable measuring unit configured to directly or indirectly measure the friction torque of the moment bearing. The measured signals from the measuring units may be analysed and processed, e.g. in the control unit, and used to calculate the friction torque. The measured signals may alternatively be used to calculate a temperature, e.g. a temperature rise, in the moment bearing, e.g. in the first and/or second rings. This allows the test device to perform a simplified test of the moment bearing where at least the friction torque is used as a control parameter.

The test device may additionally comprise one or more temperature sensors arranged relative to the first ring and/or second ring of the moment bearing when mounted. The temperature sensors may be configured to measure the temperature of the respective ring and/or the differential temperature between the two rings during testing. The measured signals from the temperature sensors may be analysed and processed, e.g. in the control unit, and used to calculate the temperature of the moment bearing, e.g. of first and/or second rings. The measured signals may alternatively be used to calculate the friction torque of the moment bearing.

The temperature sensors may be separate temperature sensors which are positioned relative to the first and/or second rings of the moment bearing during mounting. These temperature sensors may then be demounted along with the rest of the test device. Alternatively, the temperature sensors may be integrated into the moment bearing during manufacturing of the moment bearing. These integrated temperature sensors may then be used to measure the temperature during testing, e.g. by electrically connecting them to the control unit. The measured signals may be used to determine a differential temperature between the first and second rings of the moment bearing. This allows the temperature to further be used as a control parameter.

According to a special embodiment, said at least one measuring unit is arranged relative to said at least one drive unit and configured to measure at least one operating parameter of the drive unit, wherein the friction torque of the moment bearing is calculated based on said at least one operating parameter.

The measuring unit or units may alternatively be arranged relative to the drive unit or units. In example, the measuring units may be voltmeters, torque meters, ampere meters, energy meters, or another suitable measuring unit configured to measure the energy consumption of the drive unit. The measured signals from the measuring units may be analysed and processed, e.g. in the control unit, and used to calculate the friction torque. The electrical and/or mechanical efficiencies of one or more components of the test device, e.g. the gear unit and the bearing system, may further be used to determine the friction torque. The efficiencies of the individual components may be calculated, measured or otherwise determined prior to performing the test.

The measured signals may alternatively be used to calculate a temperature, e.g. a temperature raise, in the moment bearing, e.g. in the first and/or second rings. This allows the test device to perform a simplified test of the moment bearing where at least the friction torque is used as a control parameter.

According to one embodiment, the moment bearing test device further comprises at least one set of:
- support elements configured for placement on a reference surface, or
- adjustable support elements configured for levelling the moment bearing.

The test device may comprise one or more sets of support elements, e.g. support feet, configured to be placed on or fixed to a reference surface, such as a truck bed, a floor, a ground level, a table surface or another suitable reference surface. The support elements may be mounted or positioned relative to one or more of the complementary mounting elements located on the moment bearing. This allows the moment bearing to be tested separately before mounting. This also enables the moment bearing to be positioned in a horizontal position during testing.

The support element may alternatively be configured as adjustable support element capable of extending or retracting in an axial direction. This adjustment may be achieved by a linear actuator which is operated manually or via the control unit. This allows the moment bearing to be levelled horizontally before performing the test procedure.

The configuration of the test device also allows it to be mounted to the moment bearing when placed in a vertical position, such as when mounted to the rotor hub or mainframe.

According to one embodiment, the moment bearing test device further comprises a control unit configured to control the operation of the moment bearing test device.

The test device may comprise a control unit configured to control the operation of the test device which may be powered by the power source or a separate power source, e.g. batteries. The control unit may comprise a controller, e.g. a microprocessor, a memory unit, and at least one user interface. The control unit may be connected to the electrical components of the test device, e.g. the measuring units, the temperature sensors, the drive unit, and optionally the linear actuators, via a wired or wireless connection. The control unit may be a local terminal located on the test device or a remote control unit configured to communicate with the electrical components.

Alternatively, the control unit may be omitted and the measured data may be displayed directly on the measuring units and the temperature sensors. In this embodiment, the speed or frequency of the drive unit may be set or adjusted directly on the drive unit.

The invention also comprises a method of determining a friction torque of a wind turbine moment bearing, wherein the method comprises the steps of:
- providing a wind turbine moment bearing, wherein said wind turbine moment bearing comprises a first ring rotatably arranged relative to a second ring,
- mounting a moment bearing test device, as described above, to said moment bearing,
- performing at least one test procedure on said moment bearing to determine at least one signal indicative of a friction torque of the wind turbine moment bearing.

This allows for a simplified test of the moment bearing wherein the test device can test one or more control parameters, such as the friction torque and optionally the temperature of the moment bearing. The present test device can be quickly mounted to the moment bearing and subsequent demounted, which in turn saves time. The present test device furthermore has a simple and lightweight configuration that allows for an easy handling and positioning of the test device relative to only one side of the moment bearing. Conventional test rigs or stands require that the test bearing is positioned correctly inside the test rig or stand, wherein the test rig or stand is mounted to both sides of the moment bearing afterwards.

The measured control parameters may be compared to one or more threshold values or predetermined patterns in order to determine if the moment bearing has passed or failed the test. Alternatively or additionally, the measured control parameters may also be used to establish or verify the actual control parameters of the moment bearing, e.g. before or after transportation or mounting, after a running-in period or during a lifetime operation of the moment bearing.

In example, the threshold value of the friction torque may be selected between 10 kilo-Newton-meter [kNm] and 20 kNm. The threshold value for the differential temperature may be selected between 4 kilo-Watt [kW] and 12 kW.

According to one embodiment, the method further comprises the steps of:
- transporting the moment bearing test device to a test site prior to mounting said moment bearing test device, and
- demounting the moment bearing test device after completing the at least one test procedure.

The testing may be performed at the manufacturing site or the assembly site at which the moment bearing is assembled. The test device is mounted to the moment bearing and one or more test procedures are carried out on the moment bearing. Once the testing is completed, the test device is demounted. The moment bearing is then transported to the installation site or another assembly site at which the moment bearing is mounted to at least one of the rotor hub and the mainframe. Optionally, the assembly of the moment bearing and the mounting of it may be performed at the same site.

The test device can also be transported to a desired test site, such as the assembly site or the installation site. The test device may be transported directly to the test site or together with the components of the wind turbine. This is not possible with conventional test rigs or stands. After arriving at the test site, the test device is mounted to the moment bearing and one or more test procedures are carried out on the moment bearing. Once the testing is completed, the test device is demounted. The moment bearing may then be mounted to the rotor hub and the mainframe and the remaining installation or assembly of the wind turbine is completed.

According to one embodiment, the method further comprises the steps of:
- providing a wind turbine rotor hub or a wind turbine nacelle comprising at least a mainframe, and
- mounting the moment bearing to said wind turbine rotor hub or said mainframe.

The test device may further be used to test the moment bearing during its lifetime operation. In the event that a wind turbine control system detects an error that relates to the performance of the rotor, i.e. the wind turbine blades and rotor hub, or due to other circumstances, the rotor may be demounted from the nacelle, and optionally lowered to ground level. The test device may then be mounted to the moment bearing and one or more test procedures are carried out on the moment bearing. After completion of the testing, the test device is demounted and any damaged or failed components are replaced or repaired. The rotor is then remounted to the nacelle, e.g. by lifting it into position relative to the nacelle before remounting it.

The test device may additionally be used to test the moment bearing after a predetermined running-in period, e.g. upon 20 hours of operation. The running-in period may be performed before or after mounting the moment bearing to the rotor hub or the mainframe. Alternatively, the test device may be mounted to the moment bearing during the running-in period wherein the control unit may log the measured data for later analysis. This allows the test device to be used to determine the stabilised value of the friction torque and, optionally, the operating temperature after the running-in.

This allows the test device to perform a quality test on the moment bearings in order to ensure the quality and uniformity of the friction torque and temperature of the moment bearings. The test device may also perform a validity test on the moment bearings in order to verify the design parameters or pre-loading of the moment bearings, e.g. after assembly, after final lubrication, or after transportation.

### Description of the Drawing

An embodiment of the invention will now be described, by way of example only, with reference to the accompanying drawings, in which:
- Fig. 1: shows an exemplary embodiment of a wind turbine,
- Fig. 2: shows an exemplary embodiment of a moment bearing arranged between the rotor and the nacelle,
- Fig. 3: shows a first embodiment of a test device according to the invention,
- Fig. 4: shows an exploded view of the test device shown in fig. 3,
- Fig. 5: shows a second embodiment of the test device according to the invention,
- Fig. 6: shows a second embodiment of the torque arm, and
- Fig. 7: shows an exemplary embodiment of the bearing system.

In the following text, the figures will be described one by one, and the different parts and positions seen in the figures will be numbered with the same numbers in the different figures. Not all parts and positions indicated in a specific figure will necessarily be discussed together with that figure.

### Position number list

- 1.: Wind turbine
- 2.: Wind turbine tower
- 3.: Nacelle
- 4.: Hub
- 5.: Wind turbine blades
- 6.: Moment bearing
- 7.: Mainframe
- 8.: First mounting interface
- 9.: Second mounting interface
- 10.: Mounting interfaces for wind turbine blades
- 11.: Test device
- 12.: Support elements
- 13.: Mounting frame
- 14.: First ring of moment bearing
- 15.: Torque arms
- 16.: Bearing system
- 17.: Central part
- 18.: Free ends
- 19.: Mounting interfaces for drive unit
- 20.: Drive unit
- 21.: Second ring of moment bearing
- 22.: Gear unit
- 23.: Control unit
- 24.: Measuring units
- 25.: First mounting element
- 26.: Second mounting element
- 27.: First bearing element
- 28.: Second bearing element
- 29.: Rotatable bearing elements
- 30.: Gear elements
- 31.: Seal elements

### Detailed Description of the Invention

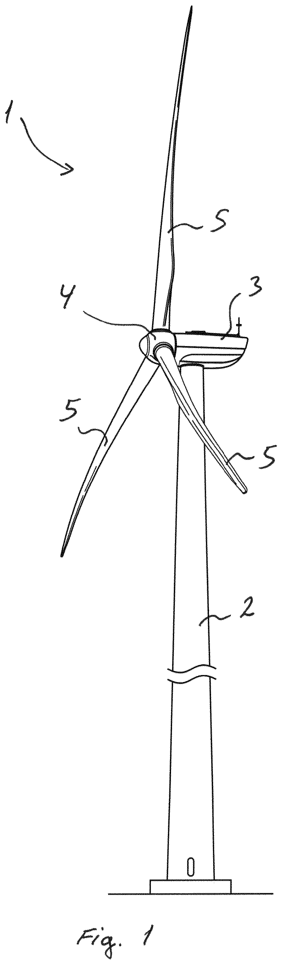

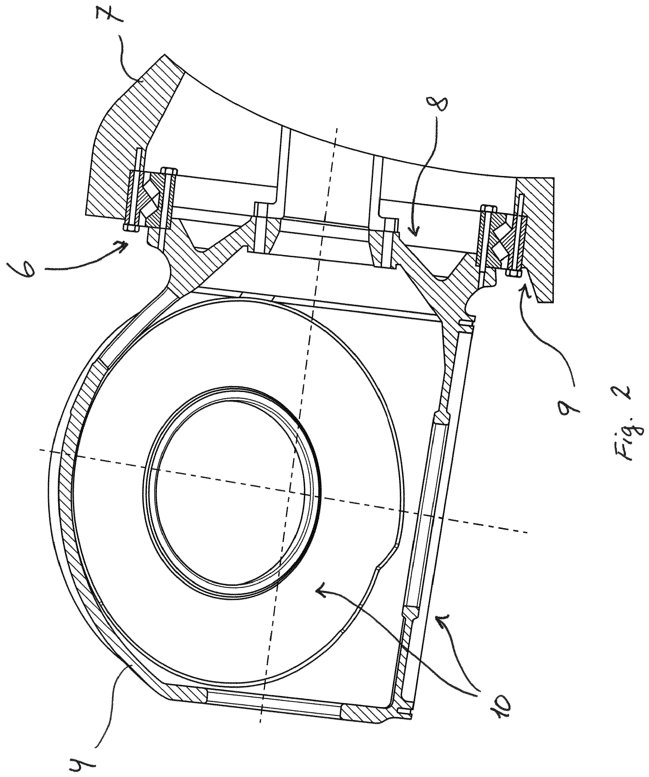

Fig. 1 shows an exemplary embodiment of a wind turbine 1 comprising a moment bearing (shown in fig. 2) according to the invention. The wind turbine 1 further comprising a wind turbine tower 2 arranged on a foundation. The foundation is here shown as an onshore foundation, but also an offshore foundation may be used. A nacelle 3 is arranged on the wind turbine tower 2, e.g. via a yaw bearing system. A rotor is rotatably arranged relative to the nacelle 3 and comprises a hub 4 mounted to at least two wind turbine blades 5, e.g. via a pitch bearing system.

The wind turbine blades 5 are here shown as full-span wind turbine blades, but also partial-pitchable wind turbine blades may be used. The partial-pitchable wind turbine blade comprises an inner blade section and an outer blade section, wherein a pitch bearing system is arranged between the two blade sections.

Fig. 2 shows an exemplary embodiment of the moment bearing 6 arranged between the rotor and the nacelle 3. Here, only the hub 4 of the rotor and a mainframe 7 of the nacelle 3 are shown for illustrative purposes. The moment bearing 6 is configured to at least transfer moment loads from the rotor to the nacelle 3, e.g. the mainframe 7. The hub 4 comprises a first mounting interface 8 facing the nacelle 3 and the mainframe 7 comprises a second mounting interface 9 facing the rotor 3. The hub 4 further comprises at least two other mounting interfaces 10 facing in a direction of the rotor. The individual mounting interfaces 10 is configured to be mounted to a corresponding mounting interface (not shown) on the respective wind turbine blades (shown in fig. 1). The moment bearing 6 is mounted to the first and second mounting interfaces 8, 9 respectively.

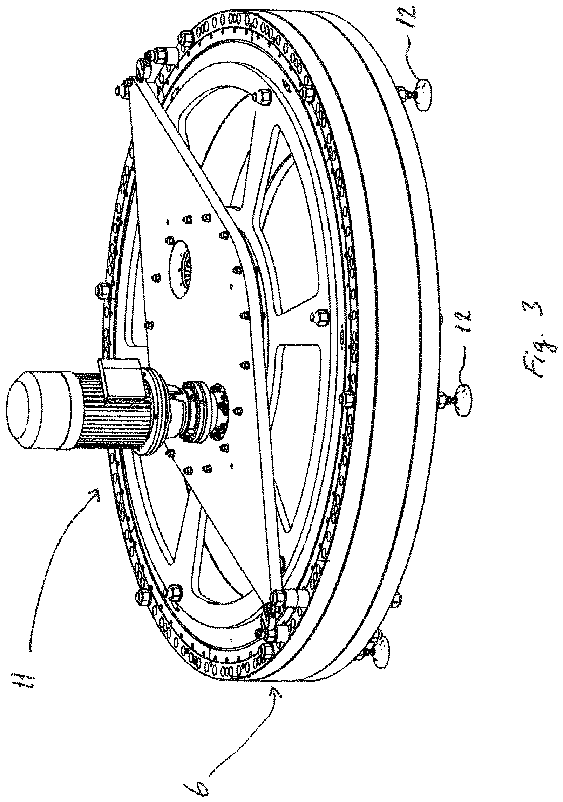

Fig. 3 shows a first embodiment of a test device 11 for testing the moment bearing 6 of the wind turbine 1. In this embodiment, the test device 11 is mounted to the moment bearing 6 using a plurality of support elements 12. The support elements 12 are mounted to one side of the moment bearing 6 and are configured to be positioned relative to a reference surface (not shown). The test device 11 is mounted to the opposite side of the moment bearing 6 as shown in fig. 3. This enables the moment bearing 6 to be tested separately before being mounted to the hub 4 or mainframe 7.

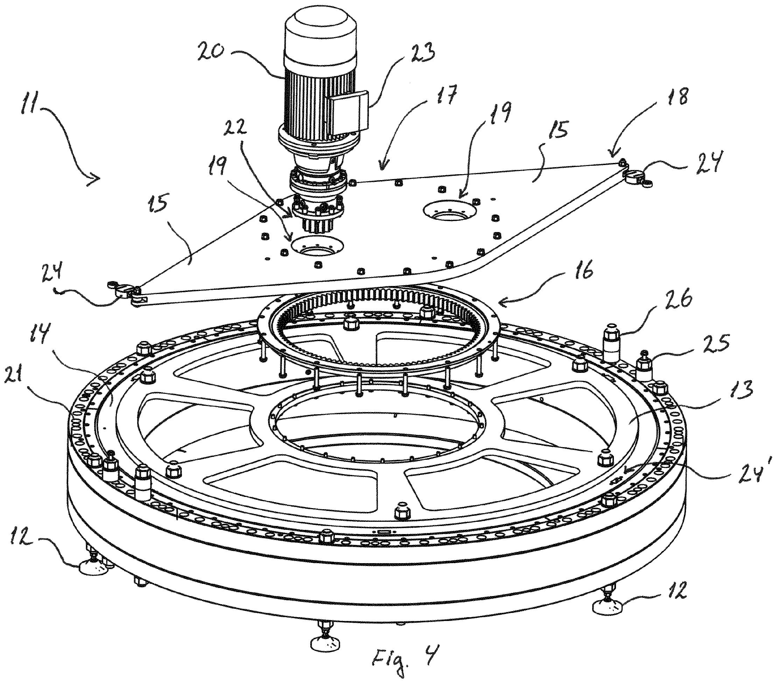

Fig. 4 shows an exploded view of the test device 11 comprising a mounting frame 13 in the form of a mounting plate having a plurality of mounting elements, e.g. mounting holes, configured to be mounted to complementary mounting elements, e.g. mounting holes, on a first ring 14 of the moment bearing 6. Here, the mounting frame 13 is mounted using separate fastening means in the form of bolts and nuts. This enables the first ring 14 to follow the rotation of the mounting frame 13 during testing.

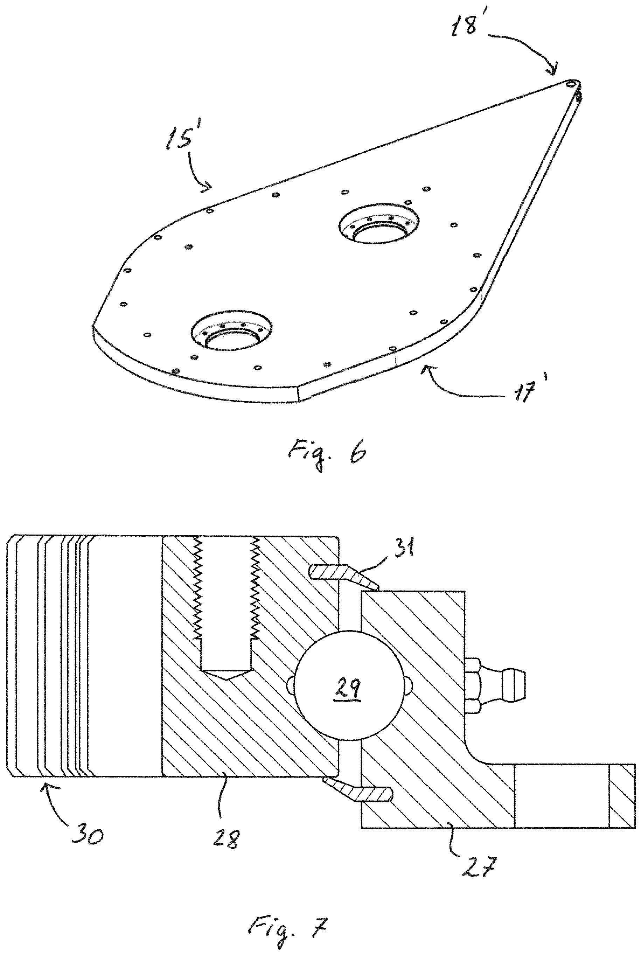

The mounting frame 13 is rotatably coupled to a plurality of torque arms 15 by means of a bearing system 16. The bearing system 16 is configured as a four-point bearing system (shown in fig. 7). In the embodiment shown in fig. 4, a first and a second torque arm are formed by a single piece having a central part 17 and two free ends 18. The first and second torque arms 15 extend in opposite facing radial directions.

The first and second torque arms 15 comprise a plurality of mounting interfaces 19 configured to be mounted to a drive unit 20. Here, a first and a second mounting interfaces are arranged in the central part 17 for selective mounting of the drive unit 20. The drive unit 20 is configured to rotate the mounting frame 13 and, thus, the first ring 14 relative to a second ring 21 of the moment bearing 6. Here, the drive unit 20 is shown as a motor rotatably coupled to a gear unit 22 which, in turn, interacts with the bearing system 16. The operation of the test device 11, e.g. the speed or frequency of the motor, may be controlled by means of a control unit 23.

A measuring unit 24 is arranged at either free end 18 of the torque arms 15 for optimal measurement of the friction torque of the moment bearing 6. Here, the measuring unit 24 is configured to measure a friction force which, in turn, is used to calculate the friction torque. Each measuring unit 24 acts as an intermediate element connected to a first mounting element 25 selectively mounted to a complementary mounting element on the second ring 21. The first mounting element 25 defines a mounting point for the measuring unit 24. A second mounting element 26 is arranged relative to the first mounting element 25. The second mounting 26 defines a stop position for the torque arm 15. This limits the rotational movement of the torque arm 15 during testing.

Another measuring unit 24' in the form of a temperature sensor is optionally arranged relative to the first ring 14 and/or the second ring 21 for measuring a temperature of the respective ring 14, 21. This allows the test device 11 to further measure a temperature, e.g. a differential temperature, of the moment bearing 6.

The support elements 12 are further mounted to the complementary mounting elements on the second ring 21 of the moment bearing as shown in figs. 3 and 4.

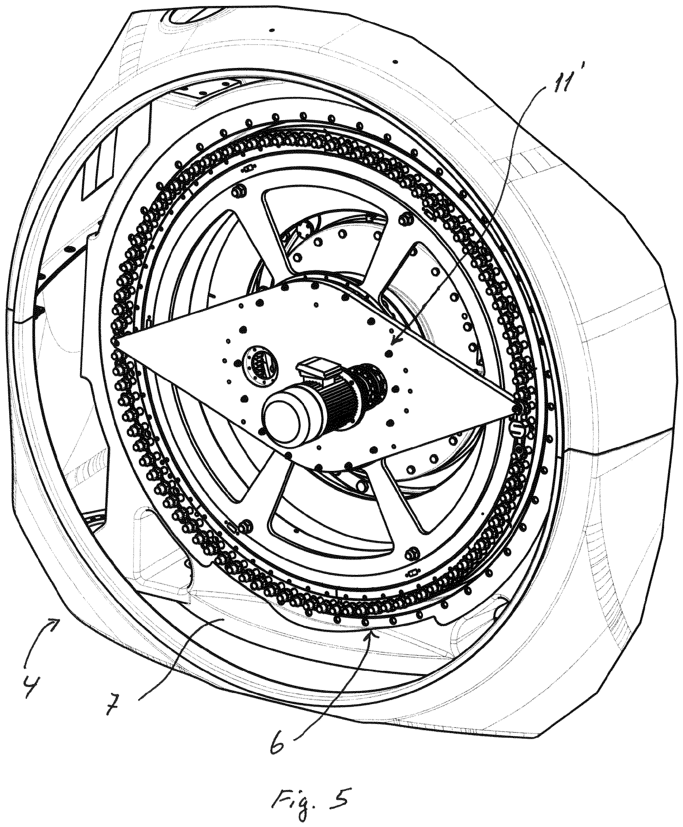

Fig. 5 shows a second embodiment of the test device 11' according to the invention. In this embodiment, the support elements 12 are omitted and the test device 11' is mounted after mounting the moment bearing 6 to the mainframe 7 or hub 4. Here, the moment bearing 6 is mounted to the mainframe 7. This enables the moment bearing 6 to be tested when mounted to the mainframe 7 or hub 4 respectively.

The test device 11, 11' shown in figs. 3 and 5 is configured as a mobile test device which can be transported to a desired test site, such as the installation site, the assembly site, or the manufacturing site. The configuration of the test device 11, 11' allows the worker at the test site to mount the test device 11, 11' in a quick and simple manner and then perform one or simple tests of the moment bearing 6. After completion of the tests, the test device 11, 11' can be demounted in a quick and simple manner and transported to another test site or mounted to another moment bearing. The same test device 11, 11' can thus be used to test the moment bearing after assembly as well as before and after mounting of the moment bearing.

Fig. 6 shows a second embodiment of the torque arm 15' having a central part 17' and only one free end 18'. A single measuring unit (not shown) may thus be arranged at the free end 18' and connected to the first mounting element 25. This allows the friction force to be measured in a single point whereas the torque arm in figs. 3 and 4 allows the friction force to be measured in a plurality of points.

Fig. 7 shows an exemplary embodiment of the bearing system 16 wherein the bearing system comprises a first bearing element 27 rotatably arranged relative to a second bearing element 28. The first bearing element 27 is configured to be mounted to the mounting frame 13. A plurality of rotatable bearing elements 29 are arranged between the first and second bearing elements 27, 28. The respective contact surfaces between the bearing elements 29 and the bearing elements 27, 28 are shaped so that they form a four-point contact bearing system.

This enables axial and radial forces in both directions to be transferred between the torque arm 15, 15' and the mounting frame 13.

The second bearing element 28 comprises a plurality of gear elements 30 configured to interact with a complementary gear element located on the drive unit 20, e.g. the gear unit 22. The respective gear elements may be configured as a pinion and an annular gear with engaging teeth as shown in fig. 4.

The spacing between the first and second bearing elements 27, 28 is optionally sealed off by means of suitable seal elements 31 arranged at either ends as shown in fig. 7. The spacing may further be partly or fully filled with a lubricant, such as oil or grease.

## Claims

1. A moment bearing test device for testing a moment bearing of a wind turbine (1), the wind turbine moment bearing comprising a first ring (14) rotatably arranged relative to a second ring (21), where a plurality of rotatable bearing elements are arranged between the first ring (14) and the second ring (21), where the moment bearing test device comprises a mounting frame (13) configured to be mounted to said first ring (14) of the moment bearing, at least one drive unit (20) is rotatably coupled to said mounting frame (13), and at least one measuring unit (24) is configured to measure at least one signal indicative of a friction torque of the moment bearing, wherein the at least one drive unit (20) is configured to rotate said first ring (14) relative to said second ring (21) when mounted, **characterised in that** the moment bearing test device further comprises at least one torque arm (15) having at least one mounting interface (19), wherein said at least one torque arm (15) is rotatably connected to the mounting frame (13), and where said at least one drive unit (20) is mounted to said at least one mounting interface (19).

2. A moment bearing test device according to claim 1, **characterised in that** said at least one torque arm (15) is rotatably connected to the mounting frame (13) via a four-point bearing system, the bearing system comprises a first bearing element (27) rotatably arranged relative to a second bearing element (28).

3. A moment bearing test device according to claim 1 or 2, **characterised in that** said at least one mounting interface (19) comprises a first mounting interface and at least a second mounting interface (19) for selective mounting of the at least one drive unit (20).

4. A moment bearing test device according to any one of claims 1 to 3, **characterised in that** said at least one torque arm (15) comprises a first torque arm extending in a first radial direction and at least a second torque arm (15) extending in at least one second radial direction.

5. A moment bearing test device according to any one of claims 1 to 4, **characterised in that** said at least one torque arm (15) comprises a free end (18), the free end (18) being connected either directly to the second ring (21) or indirectly via an intermediate element, e.g. the at least one measuring unit (24).

6. A moment bearing test device according to any one of claims 1 to 5, **characterised in that** said mounting frame (13) comprises a mounting plate on which a plurality of mounting elements are arranged, wherein said plurality of mounting elements is configured to be mounted to complementary mounting elements located on the first ring (14).

7. A moment bearing test device according to claim 6, **characterised in that** said at least one drive unit (20) is rotatably coupled to a gear unit (22), the gear unit (22) comprises a first gear element configured to engage a second gear element located on the mounting frame (13), e.g. a first bearing element (14).

8. A moment bearing test device according to any one of claims 1 to 7, **characterised in that** the moment bearing test device further comprises at least one temperature sensor (24') arranged relative to at least one of said first (14) and second rings (21) of the moment bearing.

9. A moment bearing test device according to any one of claims 1 to 8, **characterised in that** said at least one measuring unit (23) is arranged relative to said at least one drive unit (20) and configured to measure at least one operating parameter of the drive unit (20), wherein the friction torque of the moment bearing is calculated based on said at least one operating parameter.

10. A moment bearing test device according to any one of claims 1 to 9, **characterised in that** the moment bearing test device further comprises at least one set of:
- support elements (12) configured for placement on a reference surface, or
- adjustable support elements configured for levelling the moment bearing.

11. A moment bearing test device according to any one of claims 1 to 10, **characterised in that** the moment bearing test device further comprises a control unit configured to control the operation of the moment bearing test device.

12. A method of determining a friction torque of a wind turbine moment bearing, wherein the method comprises the steps of:
- providing a wind turbine moment bearing, wherein said wind turbine moment bearing comprises a first ring (14) rotatably arranged relative to a second ring(21),
- mounting a moment bearing test device according to any one of claims 1 to 11 to said moment bearing,
- performing at least one test procedure on said moment bearing to determine at least one signal indicative of a friction torque of the wind turbine moment bearing.

13. A method according to claim 12, **characterised in that** the method further comprises the steps of:
- transporting the moment bearing test device to a test site prior to mounting said moment bearing test device, and
- demounting the moment bearing test device after completing the at least one test procedure.

14. A method according to claim 12 or 13, **characterised in that** the method further comprises the steps of:
- providing a wind turbine rotor hub (4) or a wind turbine nacelle (3) comprising at least a mainframe (7), and
- mounting the moment bearing to said wind turbine rotor hub (4) or said mainframe (7).
